(19) Europäisches Patentamt
European Patent Office
Office européen des brevets

(11) **EP 3 871 311 B1**

(12) **FASCICULE DE BREVET EUROPEEN**

(45) Date de publication et mention
de la délivrance du brevet:
**14.06.2023 Bulletin 2023/24**

(21) Numéro de dépôt: **19786618.9**

(22) Date de dépôt: **18.10.2019**

(51) Classification Internationale des Brevets (IPC):
**B60L 53/63** (2019.01)    **B60L 53/64** (2019.01)
**B60L 53/66** (2019.01)    **B60L 58/13** (2019.01)
**G06Q 10/06** (2023.01)    **G06Q 50/06** (2012.01)
**G06Q 50/30** (2012.01)    **H02J 7/00** (2006.01)

(52) Classification Coopérative des Brevets (CPC):
**B60L 53/64; B60L 53/63; B60L 53/665;**
**B60L 58/13; G06Q 10/06315; G06Q 50/06;**
**G06Q 50/30; H02J 7/0071;** H02J 2203/20;
H02J 2310/48; H02J 2310/64; Y02B 70/3225;
Y02E 60/00; Y02T 10/70; Y02T 10/7072;   (Cont.)

(86) Numéro de dépôt international:
**PCT/EP2019/078317**

(87) Numéro de publication internationale:
**WO 2020/083756 (30.04.2020 Gazette 2020/18)**

(54) **MÉTHODE DE CHARGE D'UNE BATTERIE D'ACCUMULATEURS PAR UNE BORNE DE CHARGE**

VERFAHREN ZUM LADEN EINES AKKUPACKS AN EINER LADESÄULE

METHOD FOR CHARGING A BATTERY PACK AT A CHARGING STATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2018 FR 1859928**

(43) Date de publication de la demande:
**01.09.2021 Bulletin 2021/35**

(73) Titulaires:
• **Renault s.a.s**
**92100 Boulogne Billancourt (FR)**
• **NISSAN MOTOR CO., LTD.**
**Yokohama-shi, Kanagawa 221-0023 (JP)**

(72) Inventeurs:
• **ASTORG, Marine**
**75015 PARIS (FR)**
• **DREUMONT, Thomas**
**78180 MONTIGNY LE BRETONNEUX (FR)**
• **ROLLAND, Thibaud**
**92190 MEUDON (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 3 054 552**    **FR-A1- 2 979 762**
**FR-A1- 3 015 124**    **JP-A- 2012 075 281**
**US-A1- 2012 326 655**    **US-A1- 2015 314 690**
**US-A1- 2016 047 862**    **US-A1- 2017 259 683**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
Y02T 90/12; Y02T 90/16; Y02T 90/167;
Y04S 10/126; Y04S 20/222; Y04S 30/14

**Description**

La présente invention concerne de manière générale la charge des batteries d'accumulateurs des véhicules à propulsion électrique.

L'invention concerne plus spécifiquement une méthode de charge, au moyen d'une borne de charge, d'une batterie d'accumulateurs qui équipe un véhicule automobile.

Elle concerne également un véhicule automobile conçu pour mettre en oeuvre cette méthode de charge.

Elle s'applique plus particulièrement aux voitures à propulsion électrique.

ARRIERE-PLAN TECHNOLOGIQUE

Une voiture à propulsion électrique comporte de façon ordinaire une batterie d'accumulateurs de grande capacité, permettant d'alimenter en courant des moteurs électriques prévus pour propulser le véhicule.

Une telle batterie d'accumulateurs doit être régulièrement chargée. Pour cela, une solution consiste à brancher électriquement la voiture à une borne de charge publique.

La norme ISO 15118 a alors été développée pour définir un protocole de communication standard entre une borne de charge et toute voiture qui est susceptible de s'y brancher.

L'utilisation des possibilités de cette norme par le véhicule doit alors, pour optimiser la gestion d'énergie au niveau du réseau électrique, répondre à trois contraintes majeures. La première contrainte consiste à assurer à l'usager d'avoir sa batterie suffisamment chargée au moment où il souhaite repartir. La seconde contrainte consiste à ne pas surestimer les besoins de l'usager pour ne pas monopoliser inutilement la puissance disponible dans la borne de charge. La troisième contrainte consiste à imposer, après le branchement de la voiture à la borne de charge, un délai assez court à la voiture à l'issu duquel elle devra communiquer à la borne de charge quand et avec quelle puissance électrique elle devra charger la batterie d'accumulateurs de la voiture.

Le protocole utilisé prévoit que la borne de charge transmette, au moment du branchement du véhicule automobile, des informations concernant l'évolution au cours du temps de la puissance électrique disponible sur la borne de charge et du niveau de prix de l'électricité (typiquement, une information de type heure creuse / heure pleine).

Une méthode connue de sélection des créneaux horaires pendant lesquels la borne de charge devra recharger la batterie consiste alors à sélectionner les créneaux horaires en heure creuse les plus proches.

Cette méthode ne permet malheureusement d'assurer à l'usager que son véhicule soit prêt à partir à l'heure souhaitée.

Pour remédier à cet inconvénient, une solution pourrait être de demander à l'usager l'heure à laquelle il souhaite repartir, et de sélectionner des créneaux horaires de façon à ce que le coût de la recharge soit le plus réduit possible et que le véhicule soit suffisamment rechargé à l'heure du départ.

Cette solution nécessiterait toutefois que le véhicule soit en mesure de prévoir la progression de l'état de charge de la batterie en fonction des créneaux horaires sélectionnés et des puissances électriques disponibles pendant chacun de ces créneaux horaires.

On connaît pour cela du document CN103020445 une méthode de calcul de la progression de l'état de charge d'une batterie, qui nécessite toutefois d'utiliser un calculateur ayant une grosse puissance de calcul de manière à pouvoir déterminer dans le temps imparti par la norme ISO 15118 quels créneaux horaires retenir et quelle puissance électrique réserver. Cette solution s'avère ainsi très onéreuse à mettre en oeuvre.

Le document US 2016/047862 A1 enseigne un système et un procédé de charge d'une batterie de traction équipant un véhicule automobile connecté électriquement à une borne de charge. Le document US 2012/326655 A1 enseigne un véhicule automobile équipé d'un dispositif de charge d'une batterie d'accumulateurs ainsi qu'une méthode de contrôle dudit dispositif de charge.

OBJET DE L'INVENTION

Afin de remédier à l'inconvénient précité de l'état de la technique, la présente invention propose une méthode plus simple de calcul de l'évolution de la puissance de charge en fonction du temps.

Plus particulièrement, on propose selon l'invention une méthode de charge comportant des étapes :

a) de réception de données relatives à l'évolution au cours du temps de la puissance électrique disponible sur la borne de charge et du coût de l'électricité,

b) de sélection d'un créneau horaire pour lequel la puissance électrique disponible est non nulle et pour lequel le coût de l'électricité est minimum,

c) d'estimation d'une température que présentera la batterie d'accumulateurs au moment du créneau horaire et d'un niveau de charge de la batterie d'accumulateurs au début du créneau horaire,

d) de détermination de la puissance électrique que la borne de charge pourra transmettre à la batterie d'accumulateurs pendant le créneau horaire, en fonction de la température et du niveau de charge estimés à l'étape c),

e) de déduction d'un nouveau niveau de charge de la batterie d'accumulateurs à l'issue du créneau horaire, en fonction de la puissance électrique déterminée à l'étape d),

f) de comparaison du nouveau niveau de charge avec un niveau de charge cible puis, si le nouveau niveau de charge est supérieur ou égal au niveau de charge cible,

g) de charge de la batterie d'accumulateurs par la borne de charge pendant le créneau horaire à ladite puissance électrique.

Ainsi, l'invention propose une méthode simple à mettre en oeuvre, nécessitant peu de puissance de calcul, et permettant d'évaluer avec la précision requise quels créneaux horaires il conviendra de réserver auprès de la borne de charge afin d'assurer une charge la moins onéreuse possible, compte tenu de l'heure de départ prévue du véhicule et de la puissance électronique disponible auprès de la borne de charge.

D'autres caractéristiques avantageuses et non limitatives de la méthode de charge conforme à l'invention sont les suivantes :

- si le nouveau niveau de charge est inférieur au niveau de charge cible, les étapes b) à e) sont répétées en considérant un créneau horaire supplémentaire, et à l'étape f), on compare le niveau de charge cible avec le niveau de charge que présentera la batterie d'accumulateurs après les deux créneaux horaires ;
- à l'étape a), on acquiert une heure de départ à laquelle il est prévu que le véhicule automobile soit déconnecté de la borne de charge et, à l'étape b), le créneau horaire sélectionné est antérieur à l'heure de départ ;
- lors de la répétition des étapes b) à e), on détermine la puissance électrique que la borne de charge pourra transmettre à la batterie d'accumulateurs au cours de chacun des créneaux horaires, puis on en déduit l'évolution du niveau de charge de la batterie d'accumulateurs jusqu'à l'heure du départ ;
- à l'étape b), si le coût de l'électricité est minimum pour plusieurs créneaux horaires, le créneau horaire sélectionné parmi ces créneau horaires est le plus immédiat ;
- avant l'étape a), il est prévu de déterminer le niveau de charge instantané de la batterie d'accumulateurs, de comparer le niveau de charge instantané avec un seuil de niveau de charge, et, si le niveau de charge instantané est inférieur au seuil de niveau de charge, de recharger la batterie d'accumulateurs au premier créneau horaire pour lequel la puissance électrique disponible est non nulle ;
- à l'étape c), la température de la batterie d'accumulateurs est estimée à partir d'un modèle mathématique prédéterminé ou d'une cartographie prédéterminée ;
- à l'étape d), pour déterminer la puissance électrique, il est prévu de sélectionner la plus petite des puissances électriques entre la puissance électrique disponible à la borne de charge au créneau horaire sélectionné et la puissance électrique maximum admissible par le véhicule automobile, laquelle puissance électrique maximum admissible est déterminée en fonction de la température et du niveau de charge estimés à l'étape c) ;
- à l'étape e), il est prévu de calculer l'énergie qui aura été stockée dans la batterie d'accumulateurs à l'issue du créneau horaire puis d'en déduire le nouveau niveau de charge.

L'invention concerne aussi un véhicule automobile comportant au moins un moteur électrique de propulsion, une batterie d'accumulateurs adaptée à alimenter en courant électrique chaque moteur électrique, et un calculateur programmé pour mettre en oeuvre une méthode de charge telle que précitée.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'une borne de charge et d'un véhicule automobile conforme à l'invention ;
- la figure 2A est un graphique illustrant un exemple d'évolution au cours du temps de la puissance électrique disponible à la borne de charge ;
- les figures 2B et 2C sont des graphiques homologues de celui représenté sur la figure 2A, illustrant la manière de sélectionner un créneau horaire auprès de la borne de charge ;
- la figure 3A est un graphique illustrant un exemple d'évolution au cours du temps du coût de l'électricité disponible à la borne de charge ;
- les figures 3B et 3C sont des graphiques homologues de celui représenté sur la figure 3A, illustrant la manière de sélectionner un créneau horaire auprès de la borne de charge ;

- les figures 4A à 4D sont des graphiques illustrant la réservation de successivement quatre créneaux horaires auprès de la borne de charge ;
- la figure 5 est un graphique illustrant l'évolution de la puissance maximum que peut recevoir la batterie d'accumulateurs du véhicule représenté sur la figure 1 en fonction de son niveau de charge, ce graphique illustrant également la puissance maximum que la borne de charge peut débiter et la puissance maximum que le chargeur du véhicule automobile peut recevoir ;
- les figures 6A, 6B et 6C sont des graphiques illustrant l'évolution au cours du temps de respectivement le coût de l'électricité disponible auprès de la borne de charge, le niveau de charge de la batterie d'accumulateurs du véhicule automobile, et la puissance électrique consommée auprès de la borne de charge ; et
- la figure 7 est un logigramme illustrant une méthode de charge conforme à l'invention.

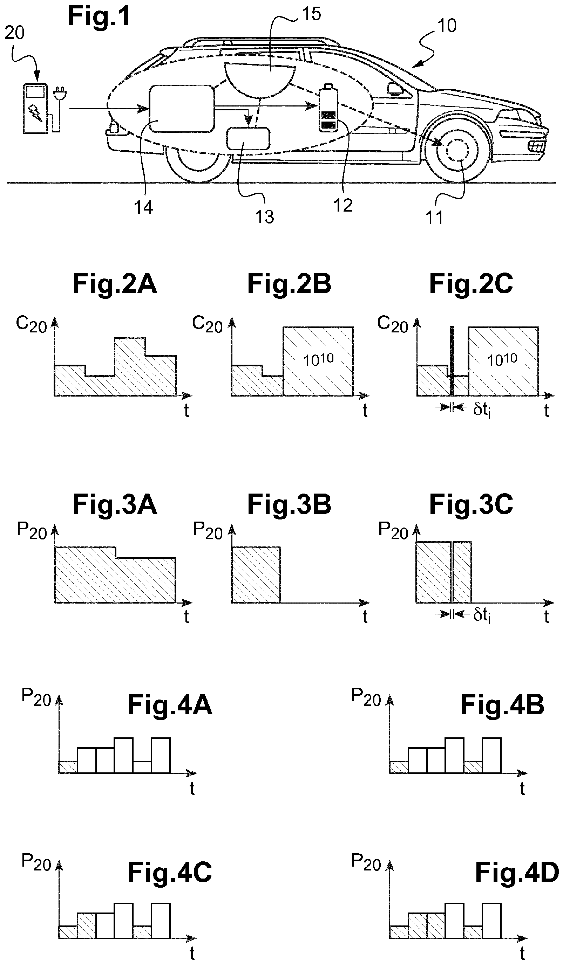

Sur la figure 1, on a représenté un véhicule automobile à propulsion électrique.

Il s'agit ici d'une voiture mais il pourrait s'agir d'un autre type de véhicule automobile (moto, camion, bateau...).

Cette voiture est ici qualifiée d'électrique en ce sens qu'elle ne comporte pas de moteur à combustion interne. En variante, il pourrait s'agir d'un véhicule hybride rechargeable.

La voiture électrique 10 comporte classiquement un châssis et des roues. Elle comporte plus spécifiquement ici :

- au moins un moteur électrique 11 permettant de faire avancer la voiture électrique 10,
- une batterie d'accumulateurs (ci-après appelée batterie de traction 12) connectée à chaque moteur électrique 11 pour l'alimenter en courant,
- des appareils auxiliaires 13 consommateurs de courant électrique (climatisation, console multimédia...),
- un chargeur 14, et
- un calculateur 15.

Le chargeur 14 comporte une prise de courant sur laquelle peut être branchée une fiche électrique de borne de charge 20.

Il est connecté à la batterie de traction 12 pour assurer sa charge. Il est également connecté ici aux appareils auxiliaires 13 de façon à pouvoir les alimenter en courant lorsque la voiture électrique 10 est branchée à la borne de charge 20.

Le calculateur 15 comporte pour sa part un processeur (CPU), une mémoire et différentes interfaces d'entrée et de sortie.

Grâce à ses interfaces d'entrée et de sortie, le calculateur est adapté à recevoir des signaux d'entrée provenant de capteurs ou d'autres appareils. Il est notamment adapté à recevoir le niveau de charge instantané $SOC_0$ de la batterie de traction 12.

Il est également adapté à communiquer avec la borne de charge 20 par l'intermédiaire du chargeur 14 pour recevoir des données relatives à l'évolution au cours du temps de la puissance électrique disponible $P_{20}$ sur la borne de charge 20 et du coût $C_{20}$ de l'électricité.

Le calculateur est aussi adapté à communiquer avec cette même borne de charge 20 pour réserver des créneaux horaires de charge du véhicule, en sélectionnant une puissance électrique de charge.

Grâce à sa mémoire, le calculateur 15 mémorise des données utilisées dans le cadre du procédé décrit ci-dessous.

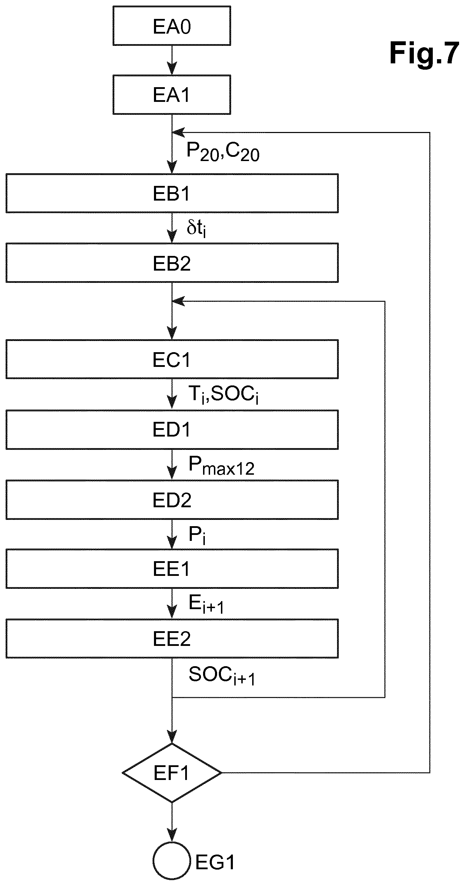

Il mémorise notamment une application informatique, constituée de programmes d'ordinateur comprenant des instructions dont l'exécution par le processeur permet la mise en oeuvre par le calculateur 15 du procédé de charge illustré sur la figure 7 et décrit ci-après.

Comme le montre cette figure 7, ce procédé de charge comporte onze étapes principales, pouvant être répétées en boucle.

Ce procédé est spécialement conçu pour permettre la charge de la batterie de traction 12 par la borne de charge 20 à des créneaux horaires qui assurent à l'usager que la batterie de traction 12 de son véhicule électrique 10 sera suffisamment rechargée lorsqu'il en aura besoin et qui permettent de réduire au maximum le coût de cette recharge.

Ce procédé est automatiquement initié lors du branchement de la voiture électrique 10 sur la borne de charge 20.

La première étape EA0 de ce procédé consiste à vérifier que la batterie de traction 12 n'est pas excessivement déchargée, ce qui risquerait de provoquer une usure prématurée de cette batterie.

Pour cela, au cours de cette première étape EA0, le calculateur 15 relève le niveau de charge instantané $SOC_0$ de la batterie de traction 12. Ce niveau de charge instantané $SOC_0$ est ici transmis au calculateur 15 par un processeur tiers qui est en charge du calcul de ce niveau de charge. En variante, il pourrait être calculé par le calculateur 15, en fonction de la tension aux bornes de la batterie de traction 12.

Le calculateur 15 compare ensuite ce niveau de charge instantané $SOC_0$ avec un seuil de niveau de charge $SOC_{min}$ prédéterminé, invariable et enregistré dans sa mémoire morte. Ce seuil de niveau de charge $SOC_{min}$ est de

préférence compris entre 10% et 30%. Il est ici égal à 20%.

Si le niveau de charge instantané $SOC_0$ est supérieur ou égal au seuil de niveau de charge $SOC_{min}$, ce qui signifie qu'aucun risque d'usure prématuré de la batterie de traction 12 n'est à craindre, le procédé se poursuit en une étape EA1 décrite ci-après.

Dans le cas contraire, le calculateur 15 envoie à la borne de charge 20 une requête pour recharger la batterie de traction 12 aux premiers créneaux horaires disponibles, jusqu'à ce que le niveau de charge instantané $SOC_0$ atteigne le seuil de niveau de charge $SOC_{min}$. Une fois ce seuil atteint, le procédé se poursuit sur l'étape EA1.

Au cours de la seconde étape EA1, le calculateur 15 acquiert l'heure de départ du véhicule électrique 10, c'est-à-dire l'heure à laquelle ce dernier devrait être déconnecté de la borne de charge 20.

Ici, le calculateur 15 acquiert non seulement cette heure de départ, mais également le niveau de charge cible $SOC_N$ que la batterie de traction 12 devra avoir atteint à cette heure là.

Pour cela, le calculateur 15 peut par exemple demander à l'usager, via une interface homme-machine dédiée, l'heure à laquelle il souhaite repartir et le lieu de destination souhaité.

Compte tenu du lieu de destination souhaité, le calculateur 15 sera en mesure de déterminer le niveau de charge cible $SOC_N$ que la batterie de traction 12 devra avoir atteint pour permettre à l'usager de parvenir à ce lieu de destination.

En variante, le calculateur 15 peut déterminer automatiquement l'heure à laquelle le véhicule repartira et le lieu de destination, par exemple en détectant que l'usager utilise systématiquement sa voiture électrique 10 pour se rendre à son travail tous les jours de la semaine.

Lors de l'étape EA1, le calculateur 15 reçoit par ailleurs de la borne de charge 20 des données relatives à l'évolution au cours du temps de la puissance électrique disponible $P_{20}$ sur la borne de charge 20 et du coût $C_{20}$ de l'électricité.

Il reçoit par exemple une table illustrant l'évolution au cours du temps de la puissance électrique disponible $P_{20}$ sur la borne de charge 20. Une telle table est illustrée graphiquement sur la figure 3A.

Il reçoit aussi une table illustrant l'évolution au cours du temps du niveau de prix de l'électricité disponible auprès de la borne de charge 20. Une telle table est illustrée graphiquement sur la figure 2A. On observe ici que le niveau de prix évolue entre quatre valeurs différentes. Bien entendu, le nombre de niveaux de prix pourra varier d'un fournisseur d'électricité à l'autre.

Les tables reçues par le calculateur 15 représentent ici ces évolutions sur 24 heures. En variante, elles pourraient représenter ces évolutions sur une période différente (par exemple jusqu'à l'heure de départ du véhicule).

Une fois reçues par le calculateur 15, ces tables sont ici discrétisées par pas de 15 minutes. Pour cela, la valeur la plus grande du coût $C_{20}$ de l'électricité au sein de chaque pas de 15 minutes est utilisée comme unique valeur du coût $C_{20}$ de l'électricité durant ce pas de 15 minutes. La valeur la plus petite de la puissance électrique disponible $P_{20}$ au sein de chaque pas de 15 minutes est par ailleurs utilisée comme unique valeur de puissance électrique disponible $P_{20}$ durant ce pas de 15 minutes.

Puis, si l'heure de départ est éloignée de plus de 24 heures, le procédé se poursuit en une étape EB1 décrite ci-après.

Dans le cas contraire, les tables sont redéfinies pour éviter que des créneaux horaires postérieurs à cette heure de départ ne puissent être sélectionnés pour la charge de la voiture électrique 10.

Pour cela, le coût $C_{20}$ de l'électricité pour chaque créneau horaire postérieur à l'heure de départ est fixé à une valeur très élevée, telle que par exemple $10^{10}$ euros (voir figure 2B). En complément ou en variante, la puissance électrique disponible $P_{20}$ auprès de la borne de charge 20 pour chaque créneau horaire postérieur à l'heure de départ est fixée à une valeur nulle (voir figure 3B).

En variante, on aurait pu redéfinir les tables en considérant une marge de sécurité d'une heure par exemple, de façon à faire en sorte que le véhicule soit chargé une heure avant l'heure de départ prévue.

Une fois les tables redéfinies, le procédé se poursuit sur l'étape EB1.

Cette troisième étape EB1 consiste à sélectionner le plus proche créneau horaire $\delta t_i$ auquel il sera judicieux de charger la batterie de traction 12.

Pour cela, le calculateur 15 sélectionne le créneau horaire $\delta t_i$ le plus proche pour lequel la puissance électrique disponible $P_{20}$ est non nulle et pour lequel le coût $C_{20}$ de l'électricité est minimum.

Au cours d'une quatrième étape EB2, le calculateur 15 met ensuite à jour les tables de façon à éviter que ce même créneau horaire $\delta t_i$ ne soit ultérieurement re-sélectionné.

Pour cela, le coût $C_{20}$ de l'électricité lors de ce créneau horaire $\delta t_i$ est fixé à une valeur très élevée, telle que par exemple $10^{10}$ euros (voir figure 2C). En complément ou en variante, la puissance électrique disponible $P_{20}$ auprès de la borne de charge 20 lors de ce créneau horaire $\delta t_i$ est fixée à une valeur nulle (voir figure 3C).

Les étapes suivantes vont alors consister à estimer le niveau de charge $SOC_{i+1}$ que devrait présenter la batterie de traction 12 à l'issue du créneau horaire $\delta t_i$ sélectionné, de façon à vérifier si, en chargeant la batterie de traction 12 pendant uniquement ce créneau horaire 8ti, l'usager pourra parvenir au lieu de destination souhaité.

Pour cela, au cours d'une cinquième étape EC1, le calculateur 15 estime la température $T_i$ que présentera la batterie de traction 12 au moment du créneau horaire $\delta t_i$ sélectionné (le moment considéré pourra être le début du créneau horaire, ou encore tout autre moment de ce créneau tel que le milieu du créneau horaire).

Cette température $T_i$ pourra être estimée à partir d'un modèle mathématique prédéterminé ou d'une cartographie prédéterminée sur banc d'essais.

Ici, le calculateur 15 calcule la température $T_i$ à l'aide du modèle mathématique suivant :

$$MCp \frac{dT_i}{dt} = RI^2 + \frac{Text - T_i}{Rthext} + \frac{Tair - T_i}{Rth(Qm)}$$

où :

- MCp, R, Rthext et Rth(Qm) sont des constantes thermiques dépendant de la chimie de la batterie de traction 12,
- Text est la température ambiante,
- Tair est la température du système de chauffage/refroidissement de la batterie de traction 12 si celui-ci est activé, et
- I est l'intensité de la batterie de traction 12.

Le calculateur 15 estime ensuite le niveau de charge $SOC_i$ que la batterie de traction 12 présentera au début du créneau horaire $\delta t_i$.

On considérera ici que ce niveau de charge $SOC_i$ sera égal au niveau de charge instantané $SOC_0$. En variante, il pourrait être différent s'il était prévu d'utiliser la batterie de traction 12 pour alimenter les appareils auxiliaires 13 consommateurs de courant électrique.

Au cours d'une sixième étape ED1, le calculateur 15 calcule la puissance électrique admissible $P_{max12}$ par la batterie de traction 12 pendant le créneau horaire $\delta t$;.

Cette puissance électrique admissible $P_{max12}$ est déterminée en fonction de la température $T_i$ et du niveau de charge $SOC_i$ estimés précédemment.

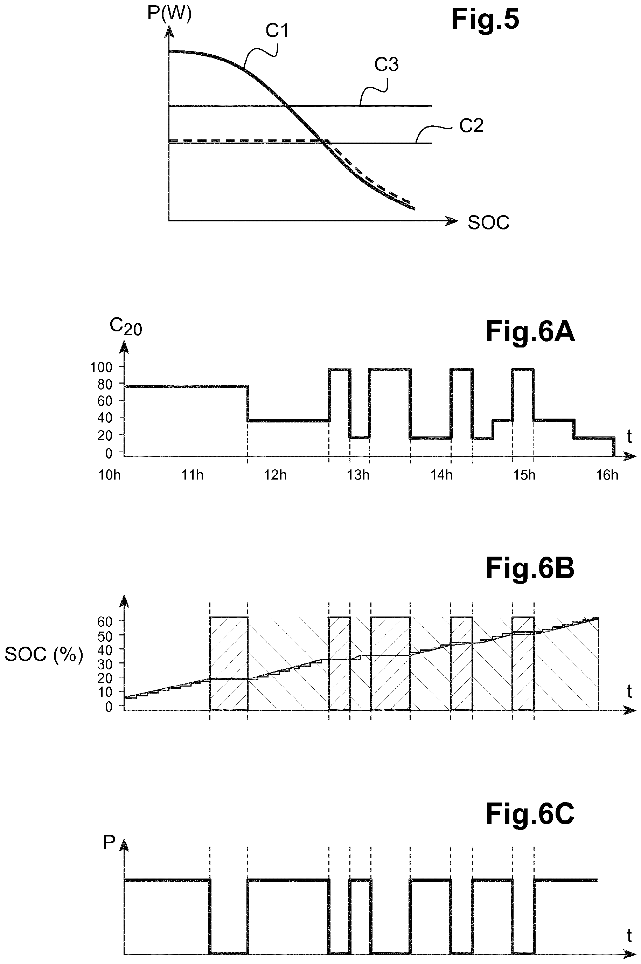

Comme le montre la courbe C1 sur la figure 5, cette puissance varie en effet en fonction du niveau de charge SOC de la batterie de traction 12, et elle est d'autant plus faible que le niveau de charge SOC est élevé.

La puissance électrique admissible $P_{max12}$ varie également en fonction de la température de la batterie de traction 12, cette puissance étant d'autant plus faible que la température T est élevée.

Pour déterminer la puissance électrique admissible $P_{max12}$, le calculateur 15 stocke dans sa mémoire des tables de valeurs qui permettent, à partir de la température $T_i$ et du niveau de charge $SOC_i$ estimés précédemment, de déterminer la puissance électrique admissible $P_{max12}$.

Au cours d'une septième étape ED2, le calculateur 15 lit dans sa mémoire la puissance électrique maximum admissible $P_{max14}$ par le chargeur 12, qui est une constante prédéterminée représentée sur la figure 5 par la droite C2.

Il lit aussi la puissance électrique disponible $P_{20}$ à la borne de charge 20 au créneau horaire $\delta t_i$ sélectionné, qui est représentée sur la figure 5 par la droite C3.

Il sélectionne alors, parmi les trois puissances $P_{max12}$, $P_{max14}$, $P_{20}$, celle qui est la plus faible et qui forme donc le maillon limitant la puissance à laquelle il sera possible de charger la batterie de traction 12.

Comme le montre la figure 5, ce maillon limitant ne sera pas le même selon le niveau de charge SOC de la batterie de traction 12 (et selon la température de la batterie).

La puissance électrique $P_i$ sélectionnée est alors associée au créneau horaire $\delta t_i$ comme étant la puissance qui sera demandée à la borne de charge 20 pour charger la batterie de traction 12 (et éventuellement aussi pour alimenter les appareils auxiliaires 13).

Le calculateur 15 détermine ensuite le nouveau niveau de charge $SOC_{i+1}$ que présentera la batterie d'accumulateurs 12 à l'issue du créneau horaire $\delta t$;.

La valeur de ce niveau de charge $SOC_{i+1}$ est déduite de la puissance électrique $P_i$ qui sera débitée par la borne de charge 20 pendant le créneau horaire $\delta t_i$. Elle est déduite également de la puissance électrique consommée par les appareils auxiliaires 13 (laquelle puissance sera ci-après considérée nulle, par simplification).

Plus précisément ici, au cours d'une huitième étape EE1, le calculateur 15 commence par déterminer l'énergie électrique $E_i$ stockée dans la batterie de traction 12 avant le créneau horaire $\delta t_i$ sélectionné.

La valeur de l'énergie électrique $E_i$ sera ici déduite du niveau de charge instantané $SOC_0$, au moyen de la formule mathématique suivante :

$$E_i = SOC_0 \cdot E_{max} \cdot SOH / 100$$

où :

- $E_{max}$ est une constante prédéterminée enregistrée dans la mémoire du calculateur 15, qui correspond à l'énergie électrique maximale que la batterie de traction 12 peut stocker, et
- SOH est l'état de santé de la batterie de traction 12, qui est transmise au calculateur 15 par un calculateur tiers.

Puis, le calculateur 15 détermine l'énergie électrique $E_{i+1}$ qui sera stockée dans la batterie de traction 12 à l'issue du créneau horaire $\delta t_i$ sélectionné, au moyen de la formule mathématique suivante :

$$E_{i+1} = E_i + P_i.\Delta t,$$

avec $\Delta t$ ici égal à 15 minutes.

Au cours d'une neuvième étape EE2, le calculateur 15 en déduit le nouveau niveau de charge $SOC_{i+1}$ que présentera la batterie de traction 12 à l'issue du créneau horaire $\delta t_i$ sélectionné, au moyen de la formule mathématique suivante :

$$SOC_{i+1} = 100.\ E_{i+1}\ /\ (E_{max}.SOH)$$

Au cours d'une dixième étape EF1, le calculateur 15 compare ce nouveau niveau de charge $SOC_{i+1}$ avec le niveau de charge cible $SOC_N$.

Si le nouveau niveau de charge $SOC_{i+1}$ est supérieur ou égal au niveau de charge cible $SOC_N$, le procédé se poursuit en une onzième étape EG1 au cours de laquelle le calculateur 15 envoie à la borne de charge une requête réservant une puissance électrique $P_i$ pendant le créneau horaire $\delta t_i$ sélectionné.

Dans le cas contraire, c'est-à-dire si ce créneau horaire $\delta t_i$ ne permettra pas à lui seul d'atteindre le niveau de charge cible $SOC_N$, le procédé se répète à partir de la troisième étape EB1 de façon à vérifier s'il est possible de charger suffisamment la batterie de traction 12 en sélectionnant non plus un seul créneau horaire, mais deux créneaux horaires.

Comme le montrent les figures 4A à 4D, le procédé pourra se répéter autant de fois que nécessaire, en sélectionnant autant de créneaux horaires supplémentaires qu'il faudra pour atteindre le niveau de charge cible $SOC_N$.

On peut alors décrire brièvement la manière selon laquelle le procédé se répète.

Lorsqu'il répète une première fois la troisième étape EB1, le calculateur 15 sélectionne le plus proche créneau horaire $\delta t_j$ pour lequel la puissance électrique disponible $P_{20}$ est non nulle et pour lequel le coût $C_{20}$ de l'électricité est minimum. Les tables ayant été mises à jour, le créneau horaire $\delta t_i$ ne sera pas ici re-sélectionné.

Puis, lors de la quatrième étape EB2, le calculateur 15 met à jour les tables de façon à éviter que ce nouveau créneau horaire $\delta t_j$ ne soit ultérieurement re-sélectionné.

Les étapes suivantes vont alors consister à estimer le niveau de charge que devrait présenter la batterie de traction 12 à l'issue des deux créneaux horaires $\delta t_i$, $\delta t_j$ sélectionnés.

Pour cela, le calculateur considère tout d'abord celui des deux créneaux horaires $\delta t_i$, $\delta t_j$ sélectionnés qui est le plus proche de l'instant présent.

Considérons par exemple qu'il s'agit du créneau horaire $\delta t_j$ (si bien que l'on peut écrire j<i).

Alors, au cours de la cinquième étape EC1, le calculateur 15 estime la température $T_j$ que présentera la batterie de traction 12 au moment du créneau horaire $\delta t_j$, à l'aide du modèle mathématique précité.

Le calculateur 15 estime également le niveau de charge $SOC_i$ que la batterie de traction 12 présentera au début du créneau horaire $\delta t_j$. On considérera ici que ce niveau de charge $SOC_j$ sera égal au niveau de charge instantané $SOC_0$.

Au cours de la sixième étape ED1, le calculateur 15 calcule la puissance électrique admissible $P_{max12}$ par la batterie de traction 12 au cours de ce créneau horaire $\delta t_j$, de la même manière qu'expliqué précédemment.

Au cours de la septième étape ED2, le calculateur 15 en déduit la puissance électrique $P_j$ à laquelle il sera possible de charger la batterie de traction 12 au cours de ce créneau horaire $\delta t_j$.

Au cours des huitième et neuvième étapes EE1, EE2, le calculateur 15 détermine le nouveau niveau de charge $SOC_{j+1}$ que présentera la batterie d'accumulateurs 12 à l'issue du créneau horaire $\delta t_j$.

Puis, le calculateur répète les étapes EC1 à EE2, en considérant cette fois l'autre créneau horaire $\delta t$;.

Pour cela, au cours de la cinquième étape EC1, le calculateur 15 estime la température $T_i$ que présentera la batterie de traction 12 au moment du créneau horaire $\delta ti$, à l'aide du modèle mathématique précité.

Puis, le calculateur 15 estime le niveau de charge $SOC_i$ que la batterie de traction 12 présentera au début du créneau horaire $\delta t_i$. On considérera ici que ce niveau de charge $SOC_i$ sera égal au niveau de charge $SOC_{j+1}$.

Au cours de la sixième étape ED1, le calculateur 15 calcule la puissance électrique admissible $P_{max12}$ par la

batterie de traction 12 au cours de ce créneau horaire 8ti, de la même manière qu'expliqué précédemment.

Au cours de la septième étape ED2, le calculateur 15 en déduit la puissance électrique $P_i$ à laquelle il sera possible de charger la batterie de traction 12 au cours de ce créneau horaire $\delta t_i$.

Au cours des huitième et neuvième étapes EE1, EE2, le calculateur 15 détermine le nouveau niveau de charge $SOC_{i+1}$ que présentera la batterie d'accumulateurs 12 à l'issue du créneau horaire $\delta t_i$.

Enfin, au cours de la dixième étape EF1, le calculateur 15 compare ce nouveau niveau de charge $SOC_{i+1}$ avec le niveau de charge cible $SOC_N$.

Si le nouveau niveau de charge $SOC_{i+1}$ est supérieur ou égal au niveau de charge cible $SOC_N$, le calculateur 15 envoie à la borne de charge une requête pour réserver les puissances électriques $P_i$, $P_j$ sélectionnées au moment des deux créneaux horaires $\delta t_i$, $\delta t_j$ sélectionnés.

Dans le cas contraire, le procédé se répète à nouveau à partir de la troisième étape EB1, en sélectionnant cette fois trois créneaux horaires (dont les deux créneaux horaires $\delta t_i$, $\delta t_j$).

Sur la figure 6A, on a représenté un exemple d'évolution au cours du temps du coût $C_{20}$ de l'électricité disponible auprès de la borne de charge 20.

Sur la figure 6B, on a représenté (de façon concomitante) l'évolution prévue du niveau de charge SOC de la batterie de traction 12 jusqu'à l'heure du départ.

Sur la figure 6C, on a représenté (de façon concomitante) les variations au cours du temps de la puissance électrique P réservée à chaque créneau horaire auprès de la borne de charge 20.

On observe sur la figure 6B que dès le début du procédé, il est prévu de charger la batterie de traction 12 jusqu'à atteindre le seuil de niveau de charge au-dessus duquel aucun risque de dégradation prématurée de la batterie de traction 12 n'est plus à craindre.

Il est ensuite prévu que la charge de la batterie se fasse pendant les créneaux horaires auxquels le coût de l'électricité est restreint. Enfin, on observe qu'à l'heure du départ, il est prévu que le niveau de charge de la batterie de traction 12 ait atteint le niveau de charge cible, qui est ici de 60%.

Grâce au procédé décrit, le calculateur 15 est donc en mesure d'envoyer rapidement à la borne de charge 20 une requête dans laquelle se trouve les créneaux horaires réservés et les puissances électriques demandées à chaque créneau horaire.

Cette méthode repose sur une estimation simplifiée de l'évolution du niveau de charge SOC de la batterie de traction 12, afin de réduire la puissance de calcul nécessaire pour mettre en oeuvre le procédé.

Il peut alors arriver que l'estimation soit légèrement erronée.

Pour éviter tout problème de charge, une fois que la charge a débuté, il est préférentiellement prévu de mettre en oeuvre une opération de surveillance de l'évolution du niveau de charge SOC de la batterie de traction 12.

Pour cela, le calculateur relève à chaque instant la valeur instantanée du niveau de charge SOC de la batterie de traction 12, puis il compare cette valeur avec celle qui était attendue.

Tant que l'écart entre ces deux valeurs reste inférieur à un seuil prédéterminé, aucune correction n'est entreprise.

En revanche, si cet écart dépasse le seuil, le calculateur réinitialise le procédé décrit ci-dessus, en émettant notamment auprès de la borne de charge une requête pour connaître les nouvelles tables de coût de l'électricité et de puissance disponible auprès de la borne.

Lors de la mise en oeuvre du procédé, un coefficient de correction est toutefois ici appliqué au calcul de la puissance électrique admissible $P_{max12}$ par la batterie de traction 12.

La valeur de ce coefficient de correction est de préférence ajustée en fonction de la vitesse avec laquelle la valeur instantanée du niveau de charge a dévié de la valeur attendue du niveau de charge.

Une fois le procédé achevé, le calculateur 15 envoie une nouvelle requête à la borne de charge 20 pour réserver de nouveaux créneaux horaires : on parle de « re-négociation ».

## Revendications

**1.** Méthode de charge d'une batterie d'accumulateurs (12) qui équipe un véhicule automobile (10) connecté électriquement à une borne de charge (20), ladite méthode comportant des étapes :

a) de réception de données relatives à l'évolution au cours du temps de la puissance électrique disponible ($P_{20}$) sur la borne de charge (20) et du coût ($C_{20}$) de l'électricité, et
b) de sélection d'un créneau horaire ($\delta t_i$) pour lequel la puissance électrique disponible ($P_{20}$) est non nulle et pour lequel le coût de l'électricité est minimum,

**caractérisée en ce qu'**elle comporte en outre des étapes :

c) d'estimation d'une température ($T_i$) que présentera la batterie d'accumulateurs (12) au moment du créneau horaire ($\delta t_i$) et d'un niveau de charge ($SOC_i$) que présentera la batterie d'accumulateurs (12) au début du créneau horaire ($\delta t_i$),

d) de détermination de la puissance électrique ($P_i$) que la borne de charge (20) pourra transmettre à la batterie d'accumulateurs (12) pendant le créneau horaire (8ti), en fonction de la température ($T_i$) et du niveau de charge ($SOC_i$) estimés à l'étape c),

e) de déduction d'un nouveau niveau de charge ($SOC_{i+1}$) de la batterie d'accumulateurs (12) à l'issue du créneau horaire (8ti), en fonction de la puissance électrique ($P_i$) déterminée à l'étape d),

f) de comparaison du nouveau niveau de charge ($SOC_{i+1}$) avec un niveau de charge cible ($SOC_N$) puis, si le nouveau niveau de charge ($SOC_{i+1}$) est supérieur ou égal au niveau de charge cible ($SOC_N$),

g) de charge de la batterie d'accumulateurs (12) par la borne de charge (20) pendant le créneau horaire ($\delta t_i$) à ladite puissance électrique ($P_i$).

2. Méthode de charge selon la revendication précédente, dans lequel, si le nouveau niveau de charge ($SOC_{i+1}$) est inférieur au niveau de charge cible ($SOC_N$) :

- les étapes b) à e) sont répétées en considérant un créneau horaire ($\delta t_j$) supplémentaire, et
- à l'étape f), on compare le niveau de charge cible ($SOC_N$) avec le niveau de charge ($SOC$) que présentera la batterie d'accumulateurs (12) après les deux créneaux horaires (5tj, $\delta t_j$).

3. Méthode de charge selon l'une des revendications précédentes, dans lequel, à l'étape a), on acquiert une heure de départ à laquelle il est prévu que le véhicule automobile (10) soit déconnecté de la borne de charge (20) et, à l'étape b), le créneau horaire sélectionné est antérieur à l'heure de départ.

4. Méthode de charge selon les deux revendications précédentes, dans lequel, lors de la répétition des étapes b) à e), on détermine la puissance électrique ($P$) que la borne de charge (20) pourra transmettre à la batterie d'accumulateurs (12) au cours de chacun des créneaux horaires (5tj, $\delta t_j$), puis on en déduit l'évolution du niveau de charge ($SOC$) de la batterie d'accumulateurs (12) jusqu'à l'heure du départ.

5. Méthode de charge selon l'une des revendications précédentes, dans lequel, à l'étape b), si le coût de l'électricité est minimum pour plusieurs créneaux horaires, le créneau horaire ($\delta t_i$) sélectionné parmi ces créneau horaires est le plus immédiat.

6. Méthode de charge selon l'une des revendications précédentes, dans lequel, avant l'étape a), il est prévu :

- de déterminer le niveau de charge instantané ($SOC_0$) de la batterie d'accumulateurs (12),
- de comparer le niveau de charge instantané ($SOC_0$) avec un seuil de niveau de charge ($SOC_{min}$), et, si le niveau de charge instantané ($SOC_0$) est inférieur au seuil de niveau de charge ($SOC_{min}$),
- de recharger la batterie d'accumulateurs (12) au premier créneau horaire pour lequel la puissance électrique disponible ($P_{20}$) est non nulle.

7. Méthode de charge selon l'une des revendications précédentes, dans lequel, à l'étape c), la température ($T_i$) de la batterie d'accumulateurs (12) est estimée à partir d'un modèle mathématique prédéterminé ou d'une cartographie prédéterminée.

8. Méthode de charge selon l'une des revendications précédentes, dans lequel, à l'étape d), pour déterminer la puissance électrique ($P_i$), il est prévu de sélectionner la plus petite des puissances électriques parmi :

- la puissance électrique disponible ($P_{20}$) à la borne de charge (20) au créneau horaire ($\delta t_i$) sélectionné, et
- la puissance électrique maximum admissible par le véhicule automobile (10), laquelle puissance électrique maximum admissible est déterminée en fonction de la température ($T_i$) et du niveau de charge ($SOC_i$) estimés à l'étape c).

9. Méthode de charge selon l'une des revendications précédentes, dans lequel, à l'étape e), il est prévu de calculer l'énergie ($E_{i+1}$) qui aura été stockée dans la batterie d'accumulateurs (12) à l'issue du créneau horaire ($\delta t_i$) puis d'en déduire le nouveau niveau de charge ($SOC_{i+1}$).

10. Véhicule automobile (10) comportant au moins un moteur électrique (11) de propulsion, et une batterie d'accumulateurs (12) adaptée à alimenter en courant électrique chaque moteur électrique (11), **caractérisé en ce qu'**il comporte un calculateur (15) programmé pour mettre en oeuvre une méthode de charge conforme à l'une des revendications précédentes.

**Patentansprüche**

1. Verfahren zum Laden eines Akkupacks (12), das ein Kraftfahrzeug (10) ausrüstet, welches elektrisch mit einer Ladesäule (20) verbunden ist, wobei das Verfahren Schritte umfasst:

   a) zum Empfangen von Daten über die Entwicklung der im Zeitverlauf an der Ladesäule (20) verfügbaren elektrischen Leistung ($P_{20}$) und der Stromkosten ($C_{20}$), und
   b) zum Auswählen eines Zeitfensters ($\delta t_i$), für das die verfügbare elektrische Leistung ($P_{20}$) nicht null ist und für das die Stromkosten minimal sind,

   **dadurch gekennzeichnet, dass** es außerdem Schritte umfasst:

   c) zum Schätzen einer Temperatur ($T_i$), die der Akkupack (12) zum Zeitpunkt des Zeitfensters ($\delta t_i$) aufweisen wird, und eines Ladestands ($SOC_i$), den der Akkupack (12) am Anfang des Zeitfensters ($\delta t_i$) aufweisen wird,
   d) zum Bestimmen der elektrischen Leistung ($P_i$), die die Ladesäule (20) während des Zeitfensters ($\delta t_i$) auf den Akkupack (12) übertragen können wird, in Abhängigkeit von der Temperatur ($T_i$) und dem Ladestand ($SOC_i$), die in Schritt c) geschätzt wurden,
   e) zum Ableiten eines neuen Ladestands ($SOC_{i+1}$) des Akkupacks (12) am Ende des Zeitfensters ($\delta t_i$) in Abhängigkeit von der in Schritt d) bestimmten elektrischen Leistung ($P_i$),
   f) zum Vergleichen des neuen Ladestands ($SOC_{i+1}$) mit einem Zielladestand ($SOC_N$) und dann, wenn der neue Ladestand ($SOC_{i+1}$) höher oder gleich dem Zielladestand ($SOC_N$) ist,
   g) zum Laden des Akkupacks (12) mit der elektrischen Leistung ($P_i$) während des Zeitfensters ($\delta t_i$) durch die Ladesäule (20).

2. Ladeverfahren nach dem vorhergehenden Anspruch, wobei, wenn der neue Ladestand ($SOC_{i+1}$) niedriger als der Zielladestand ($SOC_N$) ist:

   • die Schritte b) bis e) unter Berücksichtigung eines zusätzlichen Zeitfensters ($\delta t_j$) wiederholt werden, und
   • in Schritt f) der Zielladestand ($SOC_N$) mit dem Ladestand ($SOC$) verglichen wird, den der Akkupack (12) nach den beiden Zeitfenstern ($\delta t_i$; $\delta t_j$) aufweisen wird.

3. Ladeverfahren nach einem der vorhergehenden Ansprüche, wobei in Schritt a) eine Abfahrtszeit erfasst wird, zu der vorgesehen ist, dass das Kraftfahrzeug (10) von der Ladesäule (20) getrennt wird, und in Schritt b) das ausgewählte Zeitfenster vor der Startzeit liegt.

4. Ladeverfahren nach beiden vorhergehenden Ansprüchen, wobei bei der Wiederholung der Schritte b) bis e) die elektrische Leistung ($P$) bestimmt wird, die die Ladesäule (20) im Verlauf jedes einzelnen Zeitfensters ($\delta t_i$; $\delta t_j$) auf den Akkupack (12) übertragen kann, dann daraus die Entwicklung des Ladestands ($SOC$) das Akkupacks (12) bis zur Abfahrtszeit abgeleitet wird.

5. Ladeverfahren nach einem der vorhergehenden Ansprüche, wobei in Schritt b), wenn die Stromkosten für mehrere Zeitfenster minimal sind, das aus diesen Zeitfenstern ausgewählte Zeitfenster ($\delta t_i$) das unmittelbarste ist.

6. Ladeverfahren nach einem der vorhergehenden Ansprüche, wobei vor Schritt a) vorgesehen ist:

   • den momentanen Ladestand ($SOC_0$) des Akkupacks (12) zu bestimmen,
   • den momentanen Ladestand ($SOC_0$) mit einem Schwellenwert für den Ladestand ($SOC_{min}$) zu vergleichen und, wenn der momentane Ladestand ($SOC_0$) geringer als der Schwellenwert für den Ladestand ($SOC_{min}$) ist,
   • den Akkupack (12) im ersten Zeitfenster, für das die verfügbare elektrische Leistung ($P_{20}$) ungleich null ist, aufzuladen.

7. Ladeverfahren nach einem der vorhergehenden Ansprüche, wobei in Schritt c) die Temperatur ($T_i$) des Akkupacks (12) auf Grundlage eines vorbestimmten mathematischen Modells oder einer vorbestimmten Kartographie geschätzt wird.

8. Ladeverfahren nach einem der vorhergehenden Ansprüche, wobei in Schritt d) zum Bestimmen der elektrischen Leistung ($P_i$) vorgesehen ist, die kleinste der elektrischen Leistungen auszuwählen aus:

• der an der Ladesäule (20) verfügbaren elektrischen Leistung ($P_{20}$) im ausgewählten Zeitfenster ($\delta t_i$), und
• der maximal zulässigen elektrischen Leistung für das Kraftfahrzeug (10), wobei die maximal zulässige elektrische Leistung in Abhängigkeit von der Temperatur ($T_i$) und dem in Schritt c) geschätzten Ladestand ($SOC_i$) bestimmt wird.

9. Ladeverfahren nach einem der vorhergehenden Ansprüche, wobei in Schritt e) vorgesehen ist, die Energie ($E_{i+1}$) zu berechnen, die nach Ablauf des Zeitfensters ($\delta t_i$) im Akkupack (12) gespeichert sein wird, und dann daraus den neuen Ladestand ($SOC_{i+1}$) abzuleiten.

10. Kraftfahrzeug (10), das mindestens einen elektrischen Antriebsmotor (11) und einen Akkupack (12), der dazu geeignet ist, jeden Elektromotor (11) mit Strom zu versorgen, umfasst, **dadurch gekennzeichnet, dass** er ein Rechenwerk (15) umfasst, das zum Durchführen eines Ladeverfahrens nach einem der vorhergehenden Ansprüche programmiert ist.

**Claims**

1. Method for charging an accumulator battery (12) with which a motor vehicle (10), which is electrically connected to a charging station (20), is fitted, said method including steps:

a) of receiving data relating to the change over time in the electrical power ($P_{20}$) available at the charging station (20) and in the cost ($C_{20}$) of electricity, and
b) of selecting a time slot ($\delta t_i$) for which the available electrical power ($P_{20}$) is non-zero and for which the cost of electricity is at a minimum,

**characterized in that** it further includes steps:

c) of estimating a temperature ($T_i$) that the accumulator battery (12) will exhibit at the time of the time slot ($\delta t_i$) and a state of charge ($SOC_i$) that the accumulator battery (12) will exhibit at the start of the time slot ($\delta t_i$),
d) of determining the electrical power ($P_i$) that the charging station (20) will be able to transmit to the accumulator battery (12) during the time slot ($\delta t_i$) on the basis of the temperature ($T_i$) and the state of charge ($SOC_i$) that were estimated in step c),
e) of deriving a new state of charge ($SOC_{i+1}$) of the accumulator battery (12) at the end of the time slot ($\delta t_i$) on the basis of the electrical power ($P_i$) determined in step d),
f) of comparing the new state of charge ($SOC_{i+1}$) with a target state of charge ($SOC_N$) and then, if the new state of charge ($SOC_{i+1}$) is higher than or equal to the target state of charge ($SOC_N$),
g) of charging the accumulator battery (12) by means of the charging station (20) during the time slot ($\delta t_i$) at said electrical power ($P_i$).

2. Charging method according to the preceding claim, wherein, if the new state of charge ($SOC_{i+1}$) is lower than the target state of charge ($SOC_N$):

- steps b) to e) are repeated with regard to an additional time slot ($\delta t_j$), and,
- in step f), the target state of charge ($SOC_N$) is compared with the state of charge ($SOC$) that the accumulator battery (12) will exhibit after the two time slots ($\delta t_i$, $\delta t_j$).

3. Charging method according to either one of the preceding claims, wherein, in step a), a departure time at which the motor vehicle (10) is scheduled to be disconnected from the charging station (20) is acquired and, in step b), the selected time slot is prior to the departure time.

4. Charging method according to the two preceding claims, wherein, during the repetition of steps b) to e), the electrical power ($P$) that the charging station (20) will be able to transmit to the accumulator battery (12) during each of the time slots ($\delta t_i$, $\delta t_j$) is determined, and then the change in the state of charge ($SOC$) of the accumulator battery (12) up to the departure time is derived therefrom.

5. Charging method according to one of the preceding claims, wherein, in step b), if the cost of electricity is at a minimum for several time slots, the time slot ($\delta t_i$) selected from among these time slots is the earliest one.

6. Charging method according to one of the preceding claims, wherein, before step a), provision is made:

   - for determining the instantaneous state of charge ($SOC_0$) of the accumulator battery (12),
   - for comparing the instantaneous state of charge ($SOC_0$) with a state-of-charge threshold ($SOC_{min}$) and, if the instantaneous state of charge ($SOC_0$) is lower than the state-of-charge threshold ($SOC_{min}$),
   - for recharging the accumulator battery (12) in the first time slot for which the available electrical power ($P_{20}$) is non-zero.

7. Charging method according to one of the preceding claims, wherein, in step c), the temperature ($T_i$) of the accumulator battery (12) is estimated on the basis of a predetermined mathematical model or a predetermined map.

8. Charging method according to one of the preceding claims, wherein, in step d), in order to determine the electrical power ($P_i$), provision is made for selecting the lowest electrical power from among:

   - the electrical power ($P_{20}$) available at the charging station (20) in the selected time slot ($\delta t_i$), and
   - the maximum electrical power permissible by the motor vehicle (10), which maximum permissible electrical power is determined on the basis of the temperature ($T_i$) and the state of charge ($SOC_i$) that were estimated in step c).

9. Charging method according to one of the preceding claims, wherein, in step e), provision is made for computing the energy ($E_{i+1}$) that will have been stored in the accumulator battery (12) at the end of the time slot ($\delta t_i$) and then deriving therefrom the new state of charge ($SOC_{i+1}$).

10. Motor vehicle (10) including at least one electric drive motor (11) and an accumulator battery (12), which is designed to supply electric current to each electric motor (11), **characterized in that** it includes a computer (15), which is programmed to implement a charging method in accordance with one of the preceding claims.

# Fig.1

# Fig.2A  Fig.2B  Fig.2C

# Fig.3A  Fig.3B  Fig.3C

# Fig.4A  Fig.4B

# Fig.4C  Fig.4D

## Fig.5

P(W)

C1

C3

C2

SOC

## Fig.6A

$C_{20}$

100
80
60
40
20
0

10h   11h   12h   13h   14h   15h   16h

t

## Fig.6B

SOC (%)

60
50
40
30
20
10
0

t

## Fig.6C

P

t

**Fig.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103020445
- US 2016047862 A1
- US 2012326655 A1